# EUROPEAN PATENT APPLICATION

(11) **EP 2 083 347 A2**
(43) Date of publication of application: **29.07.2009**
(21) Application number: 08014670.7
(22) Date of filing: 15.08.2008
(51) Int. Cl.: G06F 3/03

(54) **Optical input device and portable electronic device having the same**

(30) Priority: 21.01.2008 KR 20080006174; 14.04.2008 KR 20080034164; 28.04.2008 KR 20080039246
(71) Applicant: Crucial Tec Co., Ltd., Asan-si Chungcheongnam-do 336-851 (KR)
(72) Inventor: Ahn, Keon Joon, Seongnam-si Gyeonggi-do (KR); Bae, Jae Hun, Yongin-si Gyeonggi-do (KR); Kim, Jae Dong, Seoul (KR); Bae, Hwan Soo, Anyang-si Gyeonggi-do (KR); Park, Kyong Ho, Seoul (KR)
(74) Representative: Hruschka, Jürgen

(57) **Abstract**

An optical input device (100,100a,200,300) and portable electronic device (50) having the same are disclosed, by which malfunctions of the optical input device (100,100a,200,300) due to sunlight or external illumination light are prevented or minimized. Therefore, precision of the optical input device (100,100a,200,300) can be enhanced. The optical input device (100,100a,200,300) according to the present invention includes an infrared light source (110,210,310), a cover part (120,220,320) having a contacting surface (121) for a contact by a subject, a light-receiving part (130,230,330) detecting the infrared ray, and an optical member (140,240,340) provided on an light path of the infrared ray traveling from the cover part (120,220,320) toward the light-receiving part (130,230,330), wherein the cover part (120,220,320) comprises a cover base (121a) and an infrared ray pass layer (121b) blocking out external noisy light on a predetermined band and passing substantially a wavelength band of infrared rays.

## Description

This application claims the benefit of the Korean Patent Application Nos. P2008-06174 filed on January 21, 2008, p2008-34164 filed on April 14, 2008 and p2008-39246 filed on April 28, 2008 which are hereby incorporated by reference as if fully set forth herein.

### BACKGROUND OF THE INVENTION

### Field of the Invention

The present invention relates to an optical joystick and electronic device having the same, and more particularly, to an optical joystick suitable for a user interface of such an electronic device as a mobile terminal and the like and portable electronic device having the optical joystick.

### Discussion of the Related Art

Generally, a user interface using a keypad is provided to such an electronic device as a mobile phone, a PDA (personal digital assistants) and the like.

In particular, a general portable electronic device includes a keypad provided with a plurality of buttons to input numerals, characters and symbols. A user presses the buttons of the keypad to input specific data of numbers, words and the like to the portable electronic device or to select a menu.

And, a display unit is provided to the portable electronic device to display the data inputted via the keypad and/or information related to the inputted data.

Recently, in order to support a communication or internet service that uses an electronic device, a wireless internet service such as WIBRO (wireless broadband) or a wireless mobile communication service has been commercialized. And, a portable electronic device such as a mobile phone, a PDA and the like adopts a window operating system such as Windows CE to support GUI (graphical user interface).

Along with the development of communication technology, the portable electronic device provides a user with various supplementary services. The GUI-based Windows operating system facilitates the portable electronic device to provide the supplementary service.

As a user interface for the electronic device, there is a pointing device such as a mouse, a touchpad, a joystick and the like. Recently, an optical joystick has been developed and applied to an electronic device. In this case, the optical joystick operates in a manner of detecting an optical signal varying according to a motion of a finger, which is a subject, to move such a pointer as a cursor or receive user-specific information and/or command.

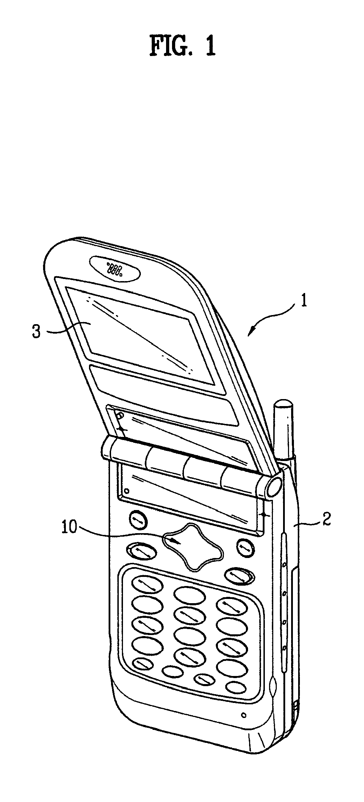

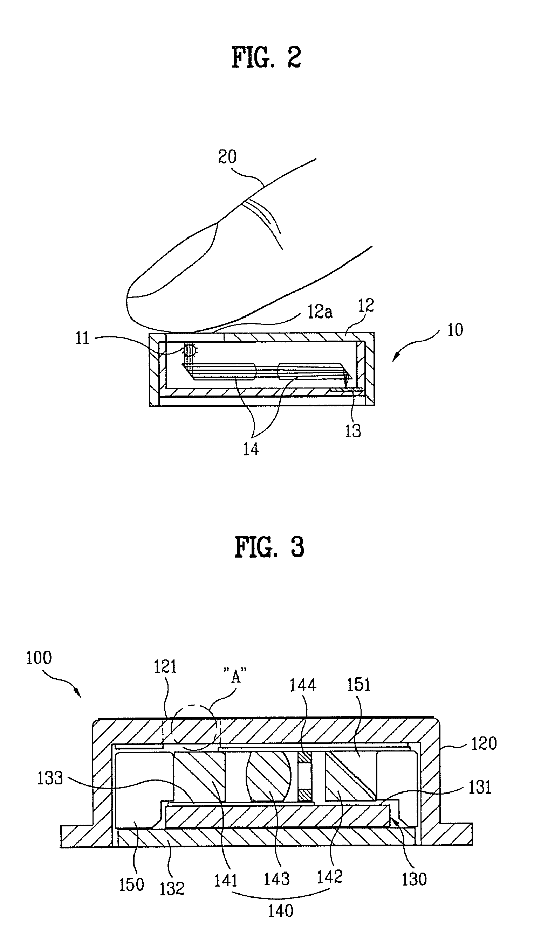

Referring to FIG. 1 and FIG. 2, an optical joystick 10 according to a related art includes a light source 11, a cover member 12, an image sensor 13 sensing an optical signal, and a light guide 14 guiding a light to the image sensor 13.

The optical joystick 10 is provided separate from an electronic device and can be connected by wireless or wireline. Yet, the optical joystick 10 can be directly loaded on a main body 2 of the electronic device 1. In case that the optical joystick 10 is built in one body of the electronic device 1, the optical joystick 10 preferably has a minimum thickness to achieve a slim size of the electronic device 1.

The cover member 12 is generally configured to have a flat plate shape. A contacting surface 12a is provided to an outer surface of the cover member 12 to come into contact with a subject 20 such as a user's finger and the like for the manipulation of the electronic device 1. And, the image sensor 13 is mounted on a PCB (printed circuit board: not shown in the drawings) to process an input signal.

If the finger or the subject 20 is touched and dragged on the contacting surface 12a, an optical signal inputted to the image sensor 13 varies according to a motion or drag of the finger to manipulate the electronic device according to the motion of the finger.

In particular, while the subject 20 is not touched with the contacting surface 12a, a light projected from the light source 11 is transmitted through the cover member 12 and is then externally irradiated.

On the other hand, if the subject 20 such as the finger is touched to the contacting surface 12a, the light projected from the light source 11 collides with the subject 20, reflects, and passes through the light guide 14, and an image of the light is then picked up by the image sensor 13.

If the subject 20 touched to the contacting surface 12a is dragged, an optical signal detected by the image sensor 13 becomes varied.

The optical signal detected by the image sensor 13 is processed by a control unit (not shown in the drawings) having an image processor (not shown in the drawings). Hence, a shift of a cursor or a content of input information according to the shift of the subject 20 is displayed on the display unit 3 of the electronic device 1, a character or numeral is inputted to the electronic device 1, or a user-specific content menu can be selected.

The optical signal detection and image control by the image sensor 13 are similar to those of a separate type optical mouse of a computer. Therefore, details of the optical signal detection and image control will be omitted in the following description.

However, while the subject 20 is not being touched to the contacting surface 12a, the light projected from the light source 11 is passed through the cover member 12 and is then discharged externally. Therefore, the corresponding dazzle may cause fatigue to user's eyes or may make user's eyesight fail.

Moreover, if sunlight or external noisy light by external illumination, e.g., visible ray or ultra-violet ray enters the optical joystick to reach the image sensor 13 via the cover member, the optical joystick may operate incorrectly. Therefore, precision of manipulation according to the motion of the subject may be lowered.

### SUMMARY OF THE INVENTION

Accordingly, the present invention is directed to an optical joystick and portable electronic device having the same that substantially obviate one or more problems due to limitations and disadvantages of the related art.

An object of the present invention is to provide an optical joystick and portable electronic device having the same, by which malfunction of the optical joystick due to external noise light is minimized or prevented.

Another object of the present invention is to provide an optical joystick and portable electronic device having the same, by which bad effects caused to a user by a light source can be minimized or prevented.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, an optical joystick according to the present invention includes an infrared light source emitting an infrared ray, a cover part having a contacting surface for a contact by a subject and being illuminated by the infrared light source, a light-receiving part detecting the infrared ray reflected by the subject, and an optical member provided on an light path of the infrared ray travelling from the cover part toward the light-receiving part. And the cover part comprises a cover base illuminated by the infrared light source and an infrared ray pass layer provided to one side of the cover base, the infrared ray pass layer blocking out external noisy light on a predetermined band and passing substantially a wavelength band of infrared rays.

In another aspect of the present invention, a portable electronic device includes an electronic device main body and an optical joystick provided to the electronic device main body, the optical joystick comprising an infrared light source emitting an infrared ray, a cover part having a contacting surface for a contact by a subject for manipulation of the electronic device, the cover part being illuminated by the infrared light source, a light-receiving part detecting the infrared ray reflected by the subject, and an optical member provided on an light path of the infrared ray travelling from the cover part toward the light-receiving part. And the cover part comprises a cover base illuminated by the infrared light source and an infrared ray pass layer provided to one side of the cover base, the infrared ray pass layer blocking out external noisy light on a predetermined band and passing substantially a wavelength band of infrared rays.

The infrared ray pass layer includes an infrared pass film attached to at least one of an inner side and an outer surface of the cover base for passing only the wavelength band of infrared rays.

The infrared ray pass layer may include an infrared pass substance coated on at least one of an inner side and an outer surface of the cover base for passing only the wavelength band of infrared rays.

The infrared light source may include an infrared LED module emitting the infrared ray.

Preferably, the optical joystick may further comprise a noisy light shielding part blocking out a noisy light, wherein the noisy light shielding part is provided to at least one of the light-receiving part and a holder accommodating the optical member therein.

The noisy light shielding part is formed of a light-shielding material.

The optical joystick may further comprise a noisy light filter provided to one side of the light-receiving part to pass light on a predetermined wavelength band to the light-receiving part.

The optical member is accommodated within a holder and wherein the holder comprises a light source installation recess for installing the infrared light source therein, an accommodation recess for accommodating the optical member therein, and a noisy light blocking part for blocking out noisy light.

And the light source installation recess is provided to an outside of the accommodation recess, wherein the infrared light source includes a light emitting surface substantially vertical to a front side of the cover part to face a direction substantially parallel with a front side of the cover part, wherein the light emitting surface opposes a reflecting surface inclinedly formed on a wall of the light source installation recess, and wherein the reflecting surface reflects the infrared ray emitted from the infrared light source toward the contacting surface.

The light-receiving part includes an optical sensor provided in a holder, wherein the infrared light source is connected to a first circuit board, the optical sensor is connected to a second circuit board, and the holder comprises a first coupling projection inserted in a first coupling hole formed at the first circuit board and a second coupling projection inserted in a second coupling hole formed at the second circuit board.

The first coupling projection is provided at a lateral side of the holder and projects in a lateral direction of the holder, the second coupling projection projects backward from a rear side of the holder, and the first circuit board is coupled to the holder to be substantially vertical to the second circuit board.

Accordingly, the present invention provides the following effects and/or advantages.

First of all, light on an infrared band, which is barely recognizable by human eyes, is emitted from an optical joystick. Therefore, eye fatigue or eyesight failure can be minimized or prevented.

Secondly, effects caused by external noisy light are minimized or prevented. Therefore, precision of manipulation according to the motion of the subject can be enhanced.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a perspective view of a portable electronic device provided with an optical joystick according to a related art;

FIG. 2 is a cross-sectional view of an optical joystick according to a related art;

FIG. 3 is a cross-sectional view of an optical joystick according to a first embodiment of the present invention;

FIG. 4 is a perspective view of an optical joystick, from which a cover part is removed, according to the first embodiment of the present invention;

FIG. 5 is an enlarged view of a part 'A' shown in FIG. 5;

FIG. 6 is an exploded perspective view of an optical joystick, from which a cover part is removed, according to the first embodiment of the present invention;

FIG. 7 is a perspective view of a portable electronic device having an optical joystick according to one embodiment of the present invention;

FIG. 8 is an exploded perspective view of an optical joystick according to a second embodiment of the present invention;

FIG. 9 is a cross-sectional view of the optical joystick shown in FIG. 8;

FIG. 10 is a cross-sectional view of an optical joystick according to a third embodiment of the present invention;

FIG. 11 is an exploded perspective view of an optical joystick, from which a cover part is removed, according to a third embodiment of the present invention;

FIG. 12 is a cross-sectional view of an optical joystick according to a fourth embodiment of the present invention;

FIG. 13 is a perspective view of an optical joystick, from which a cover part is removed, according to a fourth embodiment of the present invention; and

FIG. 14 is an exploded perspective view of an optical joystick, from which a cover part is removed, according to a fourth embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

An optical joystick and portable electronic device having the same according to a first embodiment of the present invention are explained with reference to FIGs. 3 to 7 as follows.

Referring to FIGs. 3 to 6, an optical joystick 100 according to the present invention includes a light source 110, a cover part 120, a light-receiving part 130 and an optical member 140.

The light source 110 emits or projects a light, and the cover part 120 is illuminated by the light emitted from the light source 100. In the present embodiment, the light source 110 preferably includes an infrared light source emits infrared ray to cause less fatigue to eyes than that of visible ray. More preferably, the infrared light source includes an infrared LED module.

The cover part 120 is illuminated by the infrared light source 110. A contacting surface 121 for the touch by a subject (not shown in the drawings) such as a finger and the like is provided to the cover part 120. In the following description of various embodiments of the present invention, for clarity and convenience of explanation, a surface of the cover part having the contacting surface 121 will be named a front surface of the optical joystick.

The infrared ray transmits through the contacting surface 121. If the subject is touched to the contacting surface 121, the infrared ray projected from the infrared light source 110 reflects from the subject and is then irradiated on the light-receiving part 130.

The light-receiving part 130 detects the infrared ray reflecting from the subject. In detail, the light-receiving part 130 has an optical sensor that captures the infrared ray reflecting from the subject. And, the optical sensor 131 is electrically connected to a circuit board 132.

The optical sensor 131 is an image sensor provided to the circuit board 132. The optical sensor 131 detects the infrared ray varying according to a motion of the subject and then reconfigures the detected infrared ray into an electric signal image. The information or image picked up by the optical sensor 131 is provided to an image processor (not shown in the drawings) and is then outputted to a display screen by a controller (not shown in the drawings) according to a moving direction, speed and distance of the subject and/or the like.

In this case, a light shield tape 131 a or an optical filter can be optionally attached to a surface of the optical sensor 131.

The optical member 140 is provided on a light path of an infrared ray reflecting from the subject toward the light-receiving part 130. And, the optical member 140 performs an infrared ray condensing and/or refraction/reflection of light for the configuration of the light path. Moreover, the optical member 140 can include a condensing lens 143 for focus of the infrared ray or at least one or more prisms 141 and 142 for refraction of the light path.

In the present embodiment, for achieving the slimness of the optical joystick, the light path is configured in a manner that the at least one or more prisms 141 and 142 divert a direction of the infrared ray reflecting backward from the subject to a direction (vertical to a thickness direction of the optical joystick) parallel with the front side of the optical joystick and then make the direction-diverted ray reflecting toward the optical sensor. Therefore, it is able to obtain the sufficient depth of focus.

In the present embodiment, a pair of the prisms 141 and 142 separated from each other is provided on the light path of the infrared ray to play a role as a light guide. And, the condensing lens 143 for light concentration, i.e., focusing, is provided between a pair of the prisms 141 and 142.

It is understood that various examples are applicable to the optical member as well as the prism or the condensing lens. For instance, the optical member can include such a different type of member as a waveguide, a reflecting mirror (reflector) and the like for forming the light path. Optionally, the prism and lens can be built in one body. Optionally, the prisms can be built in one body instead of being separated from each other.

The optical member 140 is accommodated within a holder 150. An accommodating recess 151 is provided to the holder 150 to accommodate the optical member 140 therein. Hence, a pair of the prisms 141 and 142 and the condensing lens 143 are loaded in the accommodating recess 151 in front of the holder 150.

The optical member 140 can further include a stop holder 144 provided between a pair of the prisms 141 and 142 to enable a predetermined quantity of infrared ray to pass through only.

A light source installation recess 152 is provided to one side of the holder 150 for the installation of the infrared light source 110. And the infrared light source 110 is mounted on another circuit board 111 and is then installed at the light source installation recess 152.

The cover part 120 covers the holder 150. In this embodiment, the cover part 120 is configured to have a cap shape. The contacting surface is provided to a front side of the cover part 120, a rear side of the cover part 120 is open, and a hollow corresponding to the shape of the holder 150 is formed within the cover part 120.

The cover part 120 is assembled with the holder 150 to enclose a lateral side of the holder 150 and cover a front side of the holder 150. Therefore, the cover part 120 prevents the separations of the prisms 141 and 142 and the condensing lens 143 and also protects the infrared light source 110.

Meanwhile, the cover part 120 blocks out external noisy lights on a predetermined band and transmits substantially a wavelength band of infrared rays. Therefore, the cover part 120 prevents or minimizes malfunctions of the optical joystick due to the external light sources.

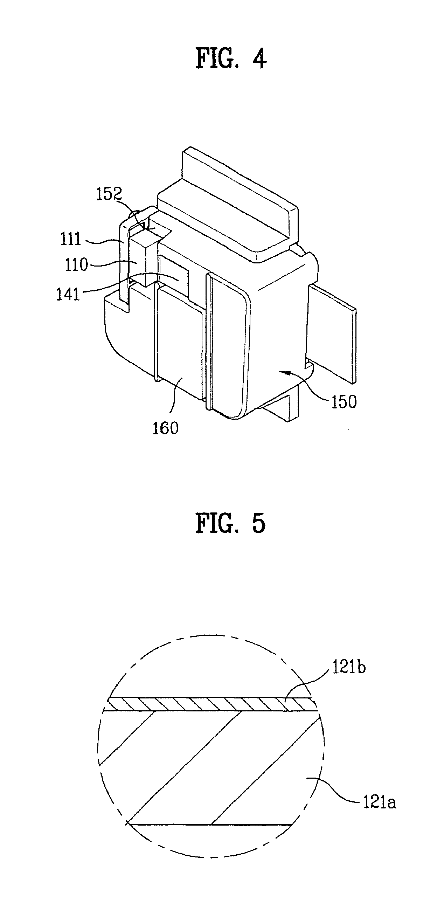

Referring to FIG. 5, the cover part 120 includes a cover base 121a illuminated by the infrared light source 110 and an infrared ray pass layer 121b provided to one side of the cover base 121 a to cut off external noisy light on a predetermined band and to substantially transmit light on infrared wavelength band.

The cover base 121 a and the infrared ray pass layer 121b configure at least one portion of the front side of the cover part 120. And, the infrared pass layer 121b can be provided to at least one of inner and outer sides of the cover base 121a to have a structure separated or contacted with the cover base 121a.

In case that the infrared ray pass layer 121b is provided to the inner side of the cover base 121a, the subject touch layer 121 is formed on the cover base 121a. In case that the infrared ray pass layer 121b is provided to the outer side (front side) of the cover base 121a, the subject touch layer 121 is formed on the infrared ray pass layer 121b.

The infrared ray pass layer 121b includes an infrared pass film attached to at least one surface of the inner and outer sides of the cover base 121a to transmit substantially the light on the infrared wavelength band only.

Alternatively, the infrared pass layer 121b can include an infrared pass substance coated on at least one surface of the inner and outer sides of the cover base 121a to substantially transmit the light on the infrared wavelength band only.

In this disclosure of the present embodiment, the infrared ray pass layer 121b includes a coating layer of pigments or paints of the infrared pass substance coated on the outer side of the cover base 121a.

Meanwhile, the cover part 120 can be formed on optical plastic material for transmitting infrared ray only by injection molding. Yet, if so, a product cost of material for the molding of the cover part is raised. If the badness of product happens, cost loss may cause a serious problem.

Preferably, a coating substance (not shown in the drawing) is coated on an outer surface of the cover part 120 to prevent scratch. In this case, the coating substance can include one of various coating substances such as UV resin and the like.

Optionally, the infrared ray pass layer 121b is provided to a portion of the front side of the cover part 120 on which the contacting surface is formed only and the rest portion of the cover part 120 can be configured to completely cut off light.

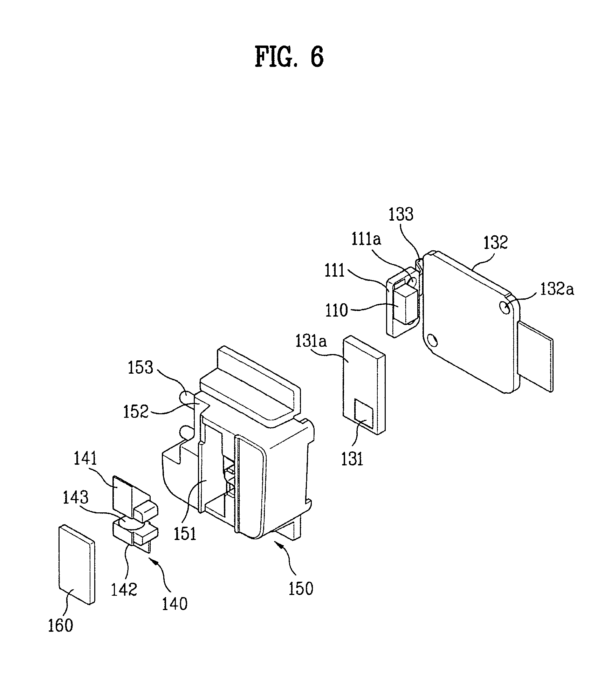

Referring to FIG. 6, the accommodating recess 151 is provided within the holder 150 having an approximately rectangular body with a front side open. Alternatively, the holder 150 can have one of various shapes such as circles, polygons and the like as well as the rectangle. Also, the cover part 120 assembled with the holder 150 can have one of various shapes such as circles, polygons and the like.

As mentioned in the foregoing description, the prisms 141 and 142 and the condensing lens 143 are loaded in the holder 150. In the following description, an upper stream of the prisms is named a first prism 141 and a downstream of the prisms is named a second prism 142.

A predetermined portion of the front side of the accommodating recess 151, and more particularly, the rest portion except a portion, on which the infrared ray reflecting from the subject is incident, is cut off by a light-shielding tape 160. Therefore, the noisy light in front of the holder 150 can be prevented from entering the accommodating recess 151.

The light source 110 and the optical sensor 131 are provided to the holder 150. For clarity and convenience of the following description, a circuit board connected to the light source 110 is named a first circuit board 111 and a circuit board connected to the optical sensor 131 is named a second circuit board 132.

The first and second circuit boards 111 and 132 are coupled to the holder 150. For this, in the present embodiment, at least one first coupling hole 111a is provided to the first circuit board 111 and at least one second coupling hole 132a is provided to the second circuit board 132.

At least one first coupling projection 153 inserted in the at least one first coupling hole 111a is provided to the holder 150. And, at least one second coupling projection (not shown in the drawing) inserted in the at least one second coupling hole 132a is provided to the holder 150.

In the present embodiment, the first circuit board 111 connected to the light source 110 is assembled to a lateral side of the holder 150 and the second circuit board 132 is assembled to a backside of the holder 150.

In particular, the first coupling projection 153 is projected from the lateral side of the holder 150 in a lateral direction and the second coupling projection is projected backward from the backside of the holder 150.

In this case, the first coupling projection 153 is provided to an inner wall of the light source installation recess 151 or to a location adjacent thereto, the optical sensor 131 is provided in front of the second circuit board 132, and the first and second circuit boards 111 and 132 are assembled to the holder 150 substantially in a vertical direction from each other.

Alternatively, according to a design condition, the first and second circuit boards 111 and 132 can be arranged in parallel with each other or at an angle in-between except 90°.

The first and second circuit boards 111 and 132 are connected to each other by a flexible circuit board. And, the second circuit board 132 is connected to a main circuit board (not shown in the drawing) of a portable electronic device that will be explained later.

In the above mentioned optical joystick according to the present invention, infrared ray projected from the infrared light source 110 is transmitted through the cover base 121a and the infrared pass layer 121b, collides with the subject, reflects therefrom, and then enters the cover part 120.

On the other hand, since sunlight or light on a predetermined wavelength band from an external illumination light, e.g., ultraviolet ray or visible ray is cut off by the infrared ray pass layer 121b of the cover part 120, external noisy light is prevented from arriving at the optical sensor 131 or can be minimized. Therefore, it is able to enhance manipulation prevision according to a motion of subject.

The infrared ray reflecting into the cover part 120 enters an incident plane of the first prism 141, passes through the condensing lens 143, is projected via a projection plane of the second prism 142, and then arrives at the optical sensor 131. And, the portable electronic device is manipulated according to the infrared information detected by the optical sensor 131.

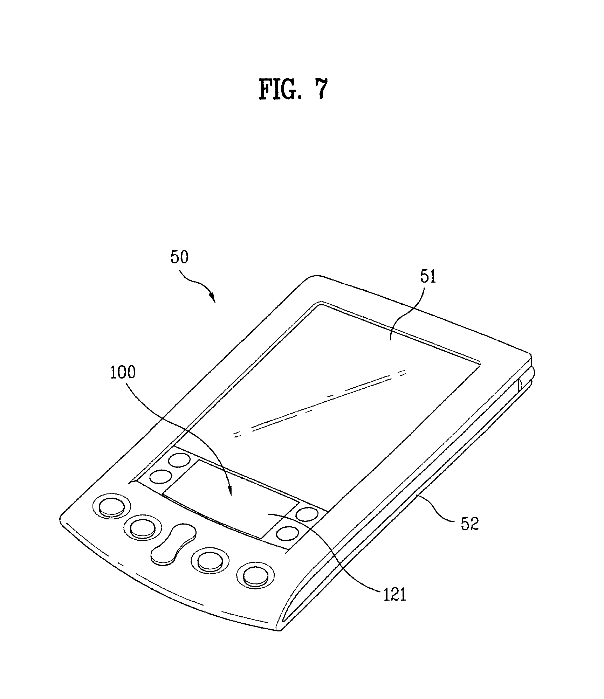

FIG. 7 is a perspective view of a portable electronic device having an optical joystick according to one embodiment of the present invention, in which PDA is shown.

Referring to FIG. 7, the portable electronic device 50 includes an electronic device main body 52 having a display unit 51 and the optical joystick 100. The optical joystick 100 is built in one body of the electronic device main body 52. And, a main circuit board (not shown in the drawing) and various electric equipments are provided within the electronic device main body 52.

Thus, if a user moves a finger on the contacting surface 121 of the optical joystick 100, a pointer or cursor is moved on a screen of the display unit 51 according to the motion of the finger. Therefore, a user-specific work such as a selection of a character, numeral, menu or the like can be performed.

In the present embodiment, PDA is used as the portable electronic device, by which various examples of the portable electronic device are not limited. The portable electronic device according to the present invention can include one of various electronic devices such as mobile phones, navigation systems, remote controller and the like.

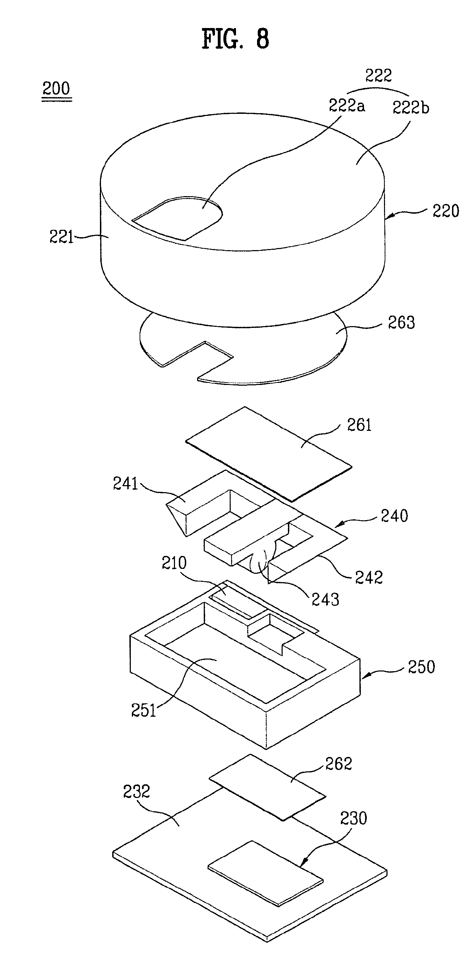

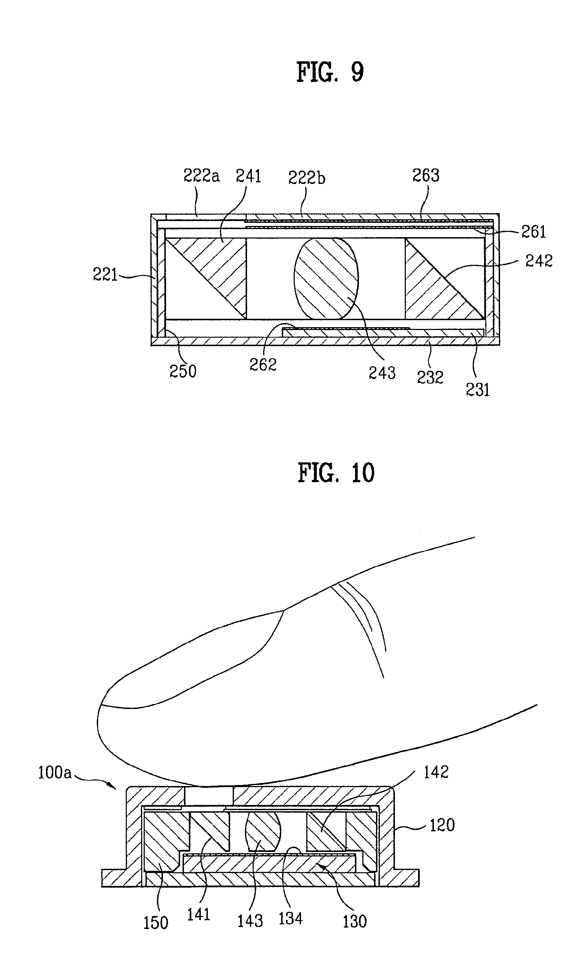

An optical joystick according to a second embodiment of the present invention is explained with reference to FIG. 8 and FIG. 9 as follows.

Referring to FIG. 8 and FIG. 9, an optical joystick 200 according to a second embodiment of the present invention includes a light source 210, a cover part 220, a holder 250, an optical member 240 accommodated within the holder 250, and a light-receiving part 230 for light detection.

The holder 250 includes an accommodation recess 251 accommodating the optical member 240 therein and a light source installation recess (not shown in the drawing) in which the light source 210 is installed. The holder 250 is assembled with the cover part 220 so that the holder 250 can be sealed by the cover part 220.

In the present embodiment, the accommodation recess 251 is provided to a central portion of the holder 250. And, the light source installation recess is provided to a rim portion of the holder 250. Alternatively, the light source installation recess can be provided to a different location according to the design condition.

The optical member 240 includes a condensing lens 243 for imaging and at least one or more prisms 241 and 242 reflecting and/or refracting light for diverting a light path. In the present embodiment, the optical member 240 includes a pair of the prisms 241 and 242. The condensing lens 243 is provided between a pair of the prisms 241 and 242 to focus an infrared ray on the light-receiving part 230.

In the present embodiment, a pair of the prisms 241 and 242 and the condensing lens 243 are built in one body.

In addition to the above configuration, the optical joystick 200 according to the present embodiment further includes noisy light shielding parts 261, 262 and 263 to cut off external noisy light, e.g., the noisy light by sunlight or external illumination light or the noisy light of the light reflecting from the subject to deviate from a predetermined light path due to diffused reflection, diffusion and/or the like.

In the present embodiment, the noisy light shielding part is provided to at least one of the holder 250 and the light-receiving part 230. Optionally, the noisy light shielding part 263 can be provided to the cover part 200.

The noisy light shielding parts 261, 262 and 263 can belong to a bandpass filter type for allowing light of a predetermined band to pass only. In the present embodiment, the noisy light shielding parts 261, 262 and 263 include adhesive tapes formed of a light-shielding substance through which light is not transmitted.

The cover part 220 is configured with a circular cap shape of which bottom is open. The cover part 220 includes a rim 221 enclosing the holder 250 and a flat front plate 222 forming a front side of the rim 221. The optical member 240 and the holder 250 having the light source loaded therein are inserted in the cover part 220 to be assembled therein.

In this case, the front plate 222 of the cover part 220 can be partitioned into a transmitting portion 222a for transmitting light and a non-transmitting portion 222b for light blocking.

For instance, the transmitting portion 222a is configured by being coated with a light-transmitting pigment to for a contacting surface, while the non-transmitting portion 222b is configured by being coated with a light-shielding pigment.

Alternatively, the cover part 220 is formed by dual injection molding with plastics differing from each other in properties to partition the front plate 222 of the cover part 220 into the transmitting portion 222a and the non-transmitting portion 222b.

Alternatively, the cover part 220, and more particularly, the front plate 222 of the cover part 220 can include the cover base and the infrared ray pass layer as mentioned in the first embodiment of the present invention. As mentioned in the foregoing description, in case that the front plate 222 is partitioned into the transmitting portion and the non-transmitting portion, the infrared ray pass layer can be provided to an inner surface and/or outer surface of the transmitting portion 222a only.

The light source 210 can include such an infrared light source as an infrared LED. Even if user's eyes are exposed to the light of a light source for a long time, the infrared LED causes less fatigue to the user's eyes than that caused by a high-luminance light source emitting visible rays.

Assuming that the noisy light shielding part 263 provided to the cover part 220 is named a first noisy light shielding part, the first noisy light shielding part 263 is provided within the cover part 220 and shields a predetermined portion of a whole surface of the front plate 222. Assuming that the noisy light shielding part 261 provided to the holder 250 is named a second noisy light shielding part, the second noisy light shielding part 261 is provided to a front side of the holder 250 to play a role in cutting off noisy light incoming form front side of the optical member 240.

Like the first embodiment of the present invention, the light-receiving part 230 includes the light sensor 231. Assuming that the noisy light shielding part 262 provided to the light-receiving part 230 is named a third noisy light shielding part, the third noisy light shielding part 262 shields a predetermined portion of a whole surface of the optical sensor 231. And, the optical sensor 231 is provided to a front side of the circuit board 232.

In particular, the first noisy light shielding part 263 forms the non-transmitting portion 222b by shielding the rest portion of the front plate 222 except the contacting surface.

In particular, the second noisy light shielding part 261 is provided on front side of the accommodation recess 251 to shield a portion of the front side of the optical member 240 so that the light path of the infrared ray, which reflects from the subject and then travels toward the optical sensor 231, is not interfered.

The third noisy light shielding part 262 shields a predetermined portion of the optical sensor 232, and more particularly, the rest of the optical sensor 231 except a focus portion at which the infrared ray is imaged. Therefore, a precise image can be captured at a portion of the optical sensor 231 in the course of carrying the infrared ray to the optical sensor 231.

The light path, operational principle, basic functions of elements and other unexplained elements of the optical joystick 200 of the present embodiment are identically applicable as those of the former description for the first embodiment of the present invention. Therefore, the iterative description will be omitted in the following description.

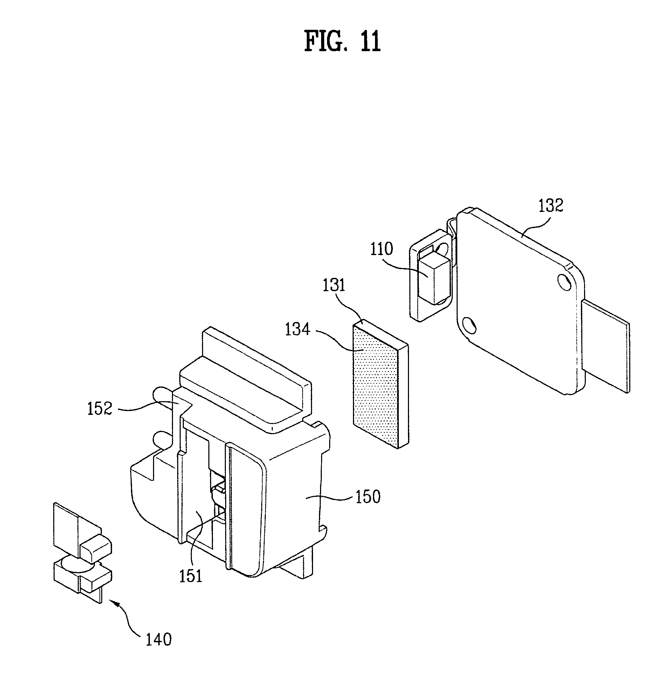

An optical joystick according to a third embodiment of the present invention is explained with reference to FIG. 10 and FIG. 11 as follows.

Referring to FIG. 10 and FIG. 11, an optical joystick 100a according to a third embodiment of the present invention includes a light source 110, a cover part 120, a holder 150, an optical member 140 accommodate within the holder 150, and a light-receiving part 130 for light detection.

In addition, the optical joystick 100a according to the present embodiment can further include a noisy light filter 134 provided to one side of the light-receiving part 130 to transmit the light of a predetermined wavelength to the light-receiving part 130 only.

The noisy light filter 134 is coated on a surface of the light-receiving part 130 to transmit an infrared ray on the wavelength band of 850±100nm.

In particular, the light-receiving part 130 includes an optical sensor 131. The noisy light filter 134 filters off the noisy light only to enable the light of a substantially infrared wavelength band to reach the optical sensor 131 only. Therefore, malfunctions of the optical joystick 100a due to the noisy light is prevented or minimized and the operational precision is enhanced.

In the present embodiment, the noisy light filter 134 includes a bandpass filter, by which other examples of the noisy light filter are not limited. Also, one of different types is available for the noisy light filter 134.

Meanwhile, the cover part 120 of the present embodiment can equivalently adopt that of the first or second embodiment. And, the rest elements and operational principle of the optical joystick except the above-explained configuration can adopt those of the former embodiments of the present invention. The same reference numbers are used for the same elements and additional details of the same elements are omitted in the following description. Yet, the external appearances of the cover part 120, the holder 150 and the like can be modified according to the design conditions.

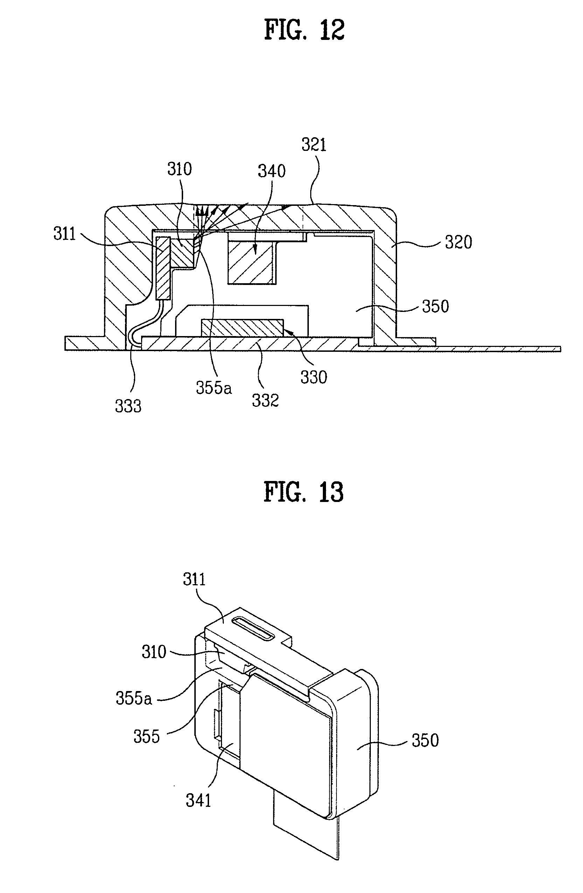

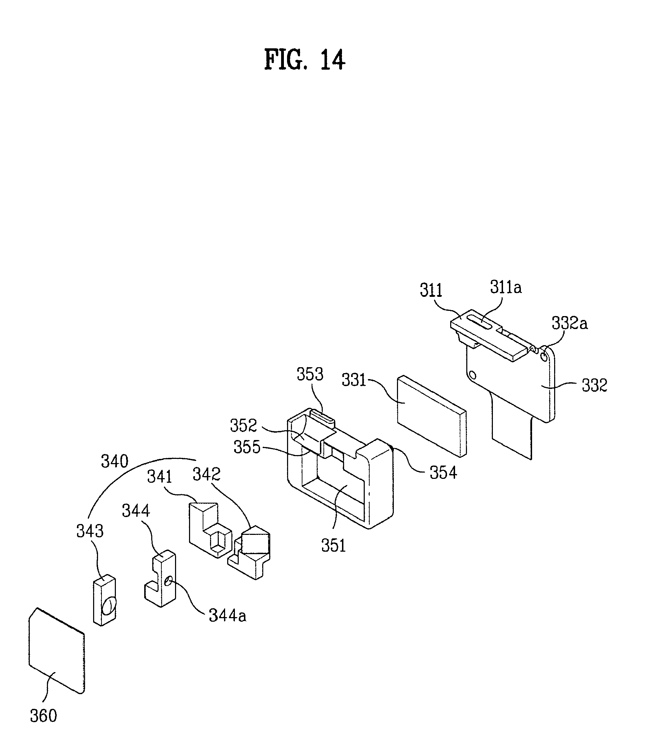

An optical joystick according to a fourth embodiment of the present invention is explained with reference to FIGs. 12 to 14 as follows.

Referring to FIGs. 12 to 14, an optical joystick 300 according to a fourth embodiment of the present invention includes a light source 310, a cover part to which a subject is touched, a holder 350, an optical member 340 accommodated with the holder 350, and a light-receiving part 330 having an optical sensor 331 for light detection.

The light source 310 and the light-receiving part 330 can have the same configurations of the former embodiments of the present invention. As their functions are identical to those of the former embodiments of the present invention, additional details will be omitted in the following description.

The cover part 320 is the portion to which a subject such as a finger and the like for the manipulation of a portable electronic device. The cover part 320 is assembled to the holder 350. And, the holder 350 is formed of synthetic resin by injection molding. Alternatively, the holder 350 can be fabricated in one of various manners.

As mentioned in the foregoing description, the light source 310 can include an infrared light source 310 projecting infrared ray. Particularly, the light source 310 can include an infrared LED which does not put limitation on various examples of the light source 310. The light source 310 is provided to a first circuit board 311 assembled to the holder 350 to be electrically connected to the first circuit board 311.

The optical sensor 331 is connected to a second circuit board 332 assembled to the older 150. In the present embodiment, the optical sensor 131 is mounted on the second circuit board 332.

Thus, in the present embodiment, the light source 311 and the optical sensor 331 are provided to the first and second circuit boards 311 and 332, which a separated from each other, respectively. And, the first and second circuit boards 311 and 332 are connected to each other by a connecting part 333.

Preferably, the connecting part 333 includes a flexible circuit board to freely set up installation locations of the first and second circuit boards 311 and 332.

To load the first and second circuit boards 311 and 332 in the holder 350, the holder 350 includes at least one first coupling projection 353 and at least one second coupling projection.

In the present embodiment, the holder 150 includes the first coupling projection 35 and a pair of the second coupling projections 354. The first coupling projection 353 couples the first circuit board 311 to the holder 350, whereas the second coupling projections 354 couple the second circuit board 332 to the holder 350.

In particular, a first coupling hole 311a is provided to the first circuit board 311 to allow the first coupling projection 353 to be inserted therein and a second coupling hole 332a is provided to the second circuit board 332 to allow the second coupling projection 354 to be inserted therein. And, the first coupling projection 353 is provided adjacent to the light source installation recess 352 of the holder 350 in which the light source is installed.

In the present embodiment, the light source installation recess 353 is provided to a lateral side of the holder 150.

And, the first coupling projection 353 is provided to the lateral side of the holder 350, and more particularly, to an inner wall of the light source installation recess 353 and projects in a lateral direction of the holder 350.

Moreover, the second coupling projection 354 is provided in a manner of being projected backward from a backside of the holder 350 to which the second circuit board 332 is assembled.

Thus, as the light source 310 and the optical sensor 331 are assembled to the first circuit board 311 and the second circuit board 332, respectively, the first coupling projection 353 is fitted into the first coupling hole 31a of the first circuit board 311 and the second coupling projection 354 is fitted into the second coupling hole 332a of the second circuit board 332. If so, the first circuit board 311 and the second circuit board 332 are coupled to the lateral side and the rear side of the holder 350, respectively.

The location, depth and width of the light source installation recess 352 and the like can be modified according to the design conditions such as an installation location of the light source 310, a light irradiation direction, a size of the light source and the like.

In the present embodiment, the second coupling projection 354 is provided to an edge of the rear side of the holder 350, by which various examples for the second coupling projection 354 are not limited to the present embodiment. The first circuit board 311 is assembled to the holder 350 to be substantially vertical to the second circuit board 332.

The first coupling projection 353 and/or the second coupling projection 354 can have one of various shapes including a circular cross-section, a polygonal cross-section and the like. Alternatively, the first coupling projection 353 and/or the second coupling projection 354 can be in a hook type.

The optical member including at least one of a prism, a light guide, a lens and the like is accommodated within the holder 350. And, a shielding tape 360 is provided to a front side of the holder 350 to prevent or minimize the introduction of the noisy light into the holder 350.

In particular, an accommodation recess 351 for accommodating the optical member 340 therein is provided to the holder 350. And, the light source installation recess 352 is provided to one side of the accommodation recess 351.

In this case, at least one or more prisms formed as one body or separate from each other and at least one lens for focusing an image are provided to the accommodation recess 351.

In the present embodiment, a pair of prisms 341 and 342 for forming an light path by refracting or reflecting the light reflecting from the subject and a condensing lens 343 are provided to the accommodation recess 351 of the holder 350.

A pair of the prisms 341 and 342 can be formed in one body or in a separate type. The condensing lens 343 is provided between a pair of the prisms 341 and 342. In this case, a pair of the prisms 341 and 342 can be formed as one body of the condensing lens 343 or can be separate from the condensing lens 343.

A magnification of the condensing lens 343 is set to 0.5-2.5 or can be modified according to the design conditions. And, the optical joystick according to the present invention can further include a stop holder 344 for cutting off the noisy light of a periphery of the light travelling to the optical sensor 331.

The stop holder 344 is provided between a pair of the prisms 341 and 342. In particular, the stop holder 344 can be provided to one side of the condensing lens 343. Alternatively, the stop holder 344 can be provided to one of various locations.

For clarity and convenience of the following description, an upper stream of the prisms is named a first prism 341 and a downstream of the prisms is named a second prism 342.

The stop holder 344 has a hole 344a for an light path. A center of the light travelling toward the optical sensor 331 passes trough the opening hole 344a and the peripheral rest is cut off by the wall of the stop holder 344. The stop holder 344 can be fabricated by one of various methods. For example, the stop holder 344 can be formed by injection molding using non-transparent synthetic resin.

Meanwhile, the holder 350 includes a noisy light blocking part 355 to cut off or block out the noisy light. In the present embodiment, the noisy light blocking part 355 forms at least one portion of a sidewall of the holder 350, and more particularly, one sidewall of the accommodation recess 351.

In particular, the noisy light blocking part 355 is form a wall of the light source installation recess 352. And, the noisy light blocking part 355 includes a reflecting surface 355a for reflecting the infrared ray emitted from the infrared light source 310 toward the contacting surface, wherein the reflecting surface 355a is inclinedly formed on the wall of the light source installation recess 352.

One sidewall of the light source installation recess 352 having the reflecting surface 355a forms the sidewall of the accommodation recess 351, therefore the light source installation recess 352 and the accommodation recess 351 are partitioned each other.

The noisy light blocking part 355 cuts off the noisy light not to be introduced into the prism or the condensing lens by deviating from the light path due to the diffused reflection and/or the diffusion.

Meanwhile, the light source 310 such as the infrared LED module and the like is arranged vertical to the front side of the optical joystick, i.e., the front plate of the cover part 320 having the contacting surface.

In particular, the light source 310 is mounted in the light source installation recess 352 provided outside the accommodation recess 351. And, the light source 310 is arranged to be substantially vertical to the front side of the cover part 320, i.e., the front plate.

In this case, the light source 310 has a light emitting surface face a direction substantially parallel with the front side of the cover part 320. Therefore, the light emitting surface of the light source 310 is arranged to be substantially vertical to the front side of the cover part 320.

In this case, the light source 310 opposes the reflecting surface 355a formed to incline to the wall of the light source installation recess 352 and projects the infrared ray toward the reflecting surface 355a.

In other words, the light emitting surface of the light source 310 vertical to the contacting surface is arranged substantially vertical to the front plate of the cover part 320 to oppose the reflecting surface 355a. And, the reflecting surface 35a is formed to incline to the front plate of the cover part 320 so as to reflect the infrared ray projected from the light source 310 toward the contacting surface.

Meanwhile, the cover part 320 can equivalently adopt details of the first embodiment. And, other elements and operational principle of the optical joystick except the above-explained configuration can adopt those of the former embodiments of the present invention. The same reference numbers are used for the same elements and additional details of the same elements are omitted in the following description.

The light path by the optical joystick in the electronic device having the above-mentioned optical joystick according to the present invention is explained as follows.

First of all, a user selects a program mode of an electronic device to use the optical joystick. If the user touches such a subject as a finger to the contacting surface of the cover part, the light projected from the light source 310 reflects from the subject by colliding with the subject and then enters the first prism 341.

In this case, the light projected from the light source 310 collides with the reflecting surface 355a of the noisy light noisy light blocking part, reflects therefrom, and is then applied to the contacting surface. The noisy light noisy light blocking part 355 prevents the noisy light from entering the prism 341 or 342 or the condensing lens 343 on a lateral side of the holder 350, thereby preventing the light having reflected from the subject from interfering with the noisy light introduced from the lateral side.

The light incident on the first prism 341 diverts its light path at an angle of 90° and then passes through the condensing lens 343 and the stop holder 344.

Meanwhile, the light incident on the second prism 342 diverts its light path at an angle of 90° and is then captured by the optical sensor 331.

According to the optical information image-captured by the optical sensor, the controller (not shown in the drawings) provided to the electronic device outputs a predetermined image such as a cursor and a pointer to a display screen of the electronic device.

Accordingly, the present invention provides the following effects and/or advantages.

First of all, an infrared ray pass layer is provided to a cover part to prevent external noisy light except infrared band from entering an optical joystick, whereby malfunctions of the optical joystick due to sunlight or external illumination light are prevented or minimized. Therefore, precision of the optical joystick can be enhanced.

Secondly, an optical joystick according to the present invention includes a noisy light shielding part and/or a noisy light filter to cut off the introduction of external noisy light into an optical sensor, thereby further enhancing manipulation precision of the optical joystick.

Thirdly, a first circuit board coupled with a light source and a second circuit board having an optical sensor are easily coupled to a holder by separate locking devices of projections and holes, respectively, thereby enhancing the assembly mechanism thereof.

Fourthly, a noisy light blocking part constructing a sidewall of a holder prevents light, which travels toward an optical sensor through a prism and condensing lens by reflecting from a subject, from interfering with noisy light, thereby enhancing precision of an optical joystick.

It will be apparent to those skilled in the art that various modifications and variations can be made in the present invention without departing from the spirit or scope of the inventions.

Thus, it is intended that the present invention covers the modifications and variations of this invention provided they come within the scope of the appended claims and their equivalents.

## Claims

1. An optical joystick (100,100a,200,300) comprising:
an infrared light source (110,210,310) emitting an infrared ray;
a cover part (120,220,320) having a contacting surface (121) for a contact by a subject and being illuminated by the infrared light source (110,210,310);
a light-receiving part (130,230,330) detecting the infrared ray reflected by the subject; and
an optical member (140,240,340) provided on an light path of the infrared ray traveling from the cover part (120,220,320) toward the light-receiving part (130,230,330)
wherein the cover part (120,220,320) comprises a cover base (121a) illuminated by the infrared light source and an infrared ray pass layer (121b) provided to one side of the cover base (121a), the infrared ray pass layer (121b) blocking out external noisy light on a predetermined band and passing substantially a wavelength band of infrared rays.

2. The optical joystick (100,100a,200,300) of claim 1, wherein the infrared ray pass layer (121b) includes an infrared pass film attached to at least one of an inner side and an outer surface of the cover base (121a) for passing only the wavelength band of infrared rays.

3. The optical joystick (100,100a,200,300) of claim 1, wherein the infrared ray pass layer (121b) includes an infrared pass substance coated on at least one of an inner side and an outer surface of the cover base (121a) for passing only the wavelength band of infrared rays.

4. The optical joystick (100,100a,200,300) of claim 1, wherein the infrared light source (110,210,310) includes an infrared LED module emitting the infrared ray.

5. The optical joystick (100,100a,200,300) of claim 1, further comprising a noisy light shielding part (261,262,263,355) blocking out a noisy light, wherein the noisy light shielding part (261,262,263,355) is provided to at least one of the light-receiving part (130,230,330) and a holder (150,250,350) accommodating the optical member (140,240,340) therein.

6. The optical joystick of claim 5, wherein the noisy light shielding part (261,262,263,355) is formed of a light-shielding material.

7. The optical joystick (100,100a,200,300) of claim 1, further comprising a noisy light filter (134) provided to one side of the light-receiving part (130,230,330) to pass light on a predetermined wavelength band to the light-receiving part (130,230,330).

8. The optical joystick (100,100a,200,300) of claim 7, wherein the noisy light filter (134) is coated on a surface of the light-receiving part (130,230,330) for passing the light on a wavelength band of 850±100nm.

9. The optical joystick (100,100a,200,300) of claim 1, wherein the optical member (140,240,340) is accommodated within a holder (150,250,350) and wherein the holder (150,250,350) comprises a light source installation recess (152,352) for installing the infrared light source (110,210,310) therein, an accommodation recess (151,251,351) for accommodating the optical member (140,240,340) therein, and a noisy light blocking part (261,262,263, 355) for blocking out noisy light.

10. The optical joystick (100,100a,200,300) of claim 9, wherein the light source installation recess (152,352) is provided to an outside of the accommodation recess (151,251,351), wherein the infrared light source (110,210,310) includes a light emitting surface substantially vertical to a front side of the cover part (120,230,330) to face a direction substantially parallel with a front side of the cover part (120,230,330), wherein the light emitting surface opposes a reflecting surface (355a) inclinedly formed on a wall of the light source installation recess (152,352), and wherein the reflecting surface (355a) reflects the infrared ray emitted from the infrared light source toward the contacting surface (121).

11. The optical joystick (100,100a,200,300) of claim 1, wherein the light-receiving part (130,230,330) includes an optical sensor (131,231,331) provided in a holder (150,250,350), wherein the infrared light source (110,210,310) is connected to a first circuit board (111,311), wherein the optical sensor (131,231,331) is connected to a second circuit board (132,332), and wherein the holder (150,250,350) comprises a first coupling projection (153,353) inserted in a first coupling hole (111a) formed at the first circuit board (111,311) and a second coupling projection (354) inserted in a second coupling hole (344a) formed at the second circuit board (132,332).

12. The optical joystick (100,100a,200,300) of claim 11, wherein the first coupling projection (153,353) is provided at a lateral side of the holder (150,250,350) and projects in a lateral direction of the holder (150,250,350), wherein the second coupling projection (354) projects backward from a rear side of the holder (150,250,350), and wherein the first circuit board (111,311) is coupled to the holder (150,250,350) to be substantially vertical to the second circuit board (132,332).

13. A portable electronic device (50) comprising an electronic device main body (52) and an optical joystick (100,100a,200,300) provided to the electronic device main body (52), the optical joystick (100,100a,200,300) comprising:
an infrared light source (110,210,310) emitting an infrared ray;
a cover part (120,220,320) having a contacting surface (121) for a contact by a subject for manipulation of the electronic device (50), the cover part (121) being illuminated by the infrared light source (110,210,310);
a light-receiving part (130,230,330) detecting the infrared ray reflected by the subject; and
an optical member (140,240,340) provided on an light path of the infrared ray traveling from the cover part (120,220,320) toward the light-receiving part (130,230,330),
wherein the cover (140,240,340) part comprises a cover base (121a) illuminated by the infrared light source (110,210,310) and an infrared ray pass layer (121b) provided to one side of the cover base (121a), the infrared ray pass layer (121b) blocking out external noisy light on a predetermined band and passing substantially a wavelength band of infrared rays.

14. The portable electronic device (50) of claim 13, wherein the infrared ray pass layer (121b) includes an infrared pass substance coated on at least one of an inner side and an outer surface of the cover base (121a) for passing only the wavelength band of infrared rays.
